# FASCICULE DE BREVET EUROPEEN

(11) **EP 3 548 239 B1**
(45) Date de publication et mention de la délivrance du brevet: **30.12.2020**
(21) Numéro de dépôt: 17812002.8
(22) Date de dépôt: 20.11.2017
(51) Int. Cl.: B29B 11/16, C08J 5/24, B29K 307/04, B29K 63/00, D03D 15/00

(54) **PROCÉDÉ DE FABRICATION D'UNE PRÉFORME FIBREUSE TISSÉE ET D'UNE PIÈCE EN MATÉRIAU COMPOSITE.**
VERFAHREN ZUR HERSTELLUNG EINER GEWEBTEN FASERVORFORM UND EINES VERBUNDSTOFFTEILS
METHOD FOR MANUFACTURING A WOVEN FIBROUS PREFORM AND A COMPOSITE MATERIAL PART

(30) Priorité: 29.11.2016 FR 1661642
(43) Date de publication de la demande: 09.10.2019
(73) Titulaire: Safran Aircraft Engines, 75015 Paris (FR)
(72) Inventeur: MOST, Vincent, Bernard, Serge, 77550 Moissy-Cramayel (FR); TECHER, Marc-Emmanuel, Jean, François, 77550 Moissy-Cramayel (FR)
(74) Mandataire: Cabinet Beau de Loménie
(86) Numéro de dépôt international: PCT/FR2017/053163
(87) Numéro de publication internationale: WO 2018/100263

(56) Documents cités:
- WO-A1-01/70855
- US-A- 3 461 025

## Description

### Arrière-plan de l'invention

La présente invention se rapporte au domaine général des procédés de fabrication de préformes fibreuses tissées et de pièces en matériau composite comprenant un renfort fibreux densifié par une matrice.

L'emploi de matériaux composites est aujourd'hui courant dans le domaine aéronautique, et ce afin de réduire la masse des pièces pour augmenter le rendement global du moteur. Par exemple, les aubes ou le carter de la soufflante d'une turbomachine aéronautique sont désormais fabriquées en matériau composite à matrice organique.

Pour fabriquer des pièces de forme complexe telles que celles précitées, on connait notamment le procédé de moulage par injection de résine ou RTM (« Resin Transfer Molding »). Ce procédé bien connu consiste à mettre en forme une préforme fibreuse sèche préalablement tissée dans un moule, puis à injecter de la résine à l'intérieur de la porosité de ladite préforme afin d'obtenir, après traitement thermique de polymérisation de la résine, la pièce en matériau composite.

Le procédé RTM présente toutefois des inconvénients. Pour assurer une bonne résistance mécanique des pièces ainsi fabriquées, il est généralement nécessaire d'augmenter la ténacité de la résine en y ajoutant des additifs qui augmentent sa viscosité. Une telle résine, plus visqueuse, est difficile à utiliser dans le procédé RTM, à cause des pressions d'injection importantes qu'elle nécessite. En outre, lors de l'injection, des chemins préférentiels pour la résine se forment dans la préforme, ce qui laisse subsister des porosités dans la pièce finale qui sont difficiles à supprimer. De même, lors de l'utilisation de torons de fibres, la résine injectée a généralement plus de difficultés à boucher les microporosités présentes entre les fibres et entre les torons. Enfin, les problèmes précités réduisent l'homogénéité de la réaction de polymérisation lors de la cuisson de la résine, ce qui peut, à terme, créer des contraintes internes dans la pièce finale et réduire sa durée de vie.

On connait également des procédés mettant en œuvre l'utilisation de plis pré imprégnés de résine, aussi appelés « prepregs ». L'emploi de prepregs permet d'utiliser des résines plus visqueuses que dans le procédé RTM, et de disposer d'une matrice ayant une ténacité améliorée. Toutefois, les prepregs se présentent généralement sous la forme de tissus bidimensionnels qui sont mal adaptés à la fabrication de pièces tridimensionnelles complexes.

Le document US 3 461 025 divulgue un procédé de fabrication d'une préforme fibreuse tissée imprégnée d'une résine précurseur de matrice.

Il existe donc un besoin pour un procédé de fabrication d'une pièce en matériau composite présentant une résistance mécanique améliorée qui ne présente pas les inconvénients précités.

### Objet et résumé de l'invention

La présente invention a donc pour but principal de pallier de tels inconvénients en proposant, selon un premier aspect, un procédé de fabrication d'une préforme fibreuse tissée imprégnée d'une résine précurseur de matrice, ladite résine présentant à l'état cru une température de transition vitreuse Tg⁰, le procédé comprenant :
- l'imprégnation de fils ou torons avec la résine,
- l'alimentation d'un métier à tisser avec les fils ou torons imprégnés maintenus à une température comprise entre Tg⁰ et Tg⁰+10°C.
- le tissage des fils ou torons dans le métier à tisser afin d'obtenir la préforme fibreuse tissée imprégnée de résine.

Par « résine à l'état cru » ou « résine crue », on entend une résine qui n'a pas encore été cuite ou exposée à une température à laquelle sa polymérisation ou cuisson a pu débuter. En d'autres termes, Tg⁰ correspond à la température de transition vitreuse d'une résine qui présente un taux de polymérisation sensiblement nul. On distingue ainsi la Tg⁰ de la Tg^{∞} qui correspond quant à elle à la température de transition vitreuse de la résine cuite, c'est-à-dire dont la polymérisation est totalement ou presque totalement achevée. De manière générale, la température de transition vitreuse crue Tg⁰ est inférieure à la température de transition vitreuse de la résine polymérisée Tg^{∞}.

Le procédé de fabrication d'une préforme fibreuse selon l'invention permet d'obtenir une préforme tissée imprégnée de résine obtenue par exemple par tissage tridimensionnel ou multicouche. La préforme fibreuse obtenue pourra ainsi constituer le renfort fibreux d'une pièce en matériau composite de forme complexe. En outre, la préforme peut être imprégnée de résines plus visqueuses que celles typiquement utilisées dans un procédé RTM puisqu'aucune injection ne sera nécessaire pour imprégner et densifier la préforme. De telles résines sont par exemple celles, connues, qui sont utilisées dans les prepregs. Il est ainsi désormais possible de bénéficier de la forte ténacité de ces résines dans une pièce avec un renfort fibreux obtenu par tissage tridimensionnel. Un procédé de fabrication d'une telle pièce sera détaillé plus loin.

Par « tissage tridimensionnel », « tissage 3D », « tissage multicouches » on entend ici un mode de tissage par lequel certains au moins des fils de chaîne lient des fils de trame sur plusieurs couches de trame. Un tel tissage peut être réalisé dans un métier à tisser de type jacquard, de façon connue en soi.

La température de transition vitreuse de la résine à l'état cru peut être la température de transition vitreuse mesurée par calorimétrie différentielle à balayage (DSC) sur la résine à l'état cru.

De manière générale, la température à laquelle les fils sont maintenus pour alimenter le métier à tisser sera choisie en fonction du type de résine utilisé. Plus précisément, cette température ne doit pas être inférieure à la Tg⁰ de la résine crue pour éviter que cette dernière ne soit trop cassante et éviter d'abîmer les fils ou torons lorsque ces derniers traversent le métier à tisser. En outre, cette température ne doit pas être supérieure à Tg⁰+10°C afin d'éviter que la résine ne soit trop liquide et collante, ce qui rendrait le tissage des fils ou torons pré imprégnés difficile à réaliser dans le métier à tisser et entraînerait un encrassage de ce dernier.

Dans un exemple de réalisation, les fils ou torons peuvent être en carbone ou en carbure de silicium.

Dans un exemple de réalisation, la résine peut être une résine thermodurcissable époxyde. Par exemple, la résine utilisée peut être une résine commerciale telle que celle commercialisée sous la référence « HexPly® 8552 » par la société Hexcel, ou encore la résine « CYCOM® 934 » de la société CYTEC. La résine utilisée peut aussi être une résine de la famille des bismaléimides (MBI), ou encore une résine thermoplastique.

Dans un exemple de réalisation, les fils ou torons imprégnés de résine peuvent être présents dans une enceinte réfrigérée alimentant le métier à tisser en fils ou torons imprégnés de résine. Les fils ou torons peuvent être stockés dans l'enceinte réfrigérée, ou peuvent en variante simplement la traverser avant d'être tissés.

Dans un exemple de réalisation, le tissage des fils ou torons peut être un tissage tridimensionnel.

L'invention vise aussi, selon un deuxième aspect, un procédé de fabrication d'une pièce en matériau composite comprenant un renfort fibreux densifié par une matrice, le procédé comprenant les étapes suivantes :
- fabrication d'une préforme fibreuse tissée imprégnée d'une résine précurseur de matrice par un procédé tel que celui décrit plus haut,
- placement de la préforme fibreuse dans une cavité d'un moule ayant la forme de la pièce à fabriquer,
- chauffage de la préforme fibreuse à une température de ramollissement de la résine de façon à liquéfier la résine,
- élimination de l'air présent dans la préforme fibreuse,
- compactage de la préforme fibreuse dans le moule,
- traitement thermique de polymérisation de la résine présente dans la porosité de la préforme fibreuse de façon à obtenir la pièce en matériau composite, et
- démoulage de la pièce en matériau composite.

L'élimination de l'air présent dans la préforme fibreuse peut être réalisé en mettant sous vide la cavité du moule, ou en faisant le vide dans une enceinte fermée dans laquelle est présent le moule. De préférence, l'élimination de l'air présent dans la préforme fibreuse est réalisée simultanément ou après le chauffage de la préforme fibreuse à une température de ramollissement de la résine de façon à permettre un meilleur échappement des bulles d'air de la préforme. La température de ramollissement de la résine peut être, de façon connue, la température à laquelle la viscosité de la résine atteint un minimum, ou encore la température permettant l'évacuation des bulles d'air présentes dans la préforme. Le compactage de la préforme fibreuse dans le moule permet de faire dégorger éventuellement le surplus de résine présent dans la préforme, et peut s'accompagner d'une phase de maintien d'une pression de compaction sur le moule et/ou d'une réinjection du surplus de résine dans le moule pour maintenir une pression uniforme à l'intérieur de la cavité du moule.

En mettant en œuvre un tel procédé, la porosité de la préforme est uniformément gorgée de résine et l'absence de porosité résiduelle est assurée. Ainsi, la polymérisation ou cuisson de la résine peut être réalisée de manière uniforme dans toute la préforme imprégnée, réduisant la présence de contraintes internes dans la pièce finale. Le procédé selon l'invention permet ainsi de réaliser des pièces en matériau composite comprenant un renfort fibreux obtenu par exemple par tissage tridimensionnel, et une matrice obtenue à partir de résines à plus forte ténacité et plus visqueuses que celles utilisées dans les procédés RTM, ce qui n'était pas envisageable auparavant.

Dans un exemple de réalisation, la pièce fabriquée peut être une aube de soufflante ou un carter de soufflante de turbomachine aéronautique.

Dans un exemple de réalisation, l'étape de compactage de la préforme fibreuse dans le moule peut comprendre la réinjection dans le moule d'un surplus de résine ayant dégorgé de la préforme de façon à maintenir une pression uniforme à l'intérieur de la cavité du moule.

L'invention vise enfin, selon un troisième aspect, une installation pour la fabrication d'une préforme fibreuse tissée imprégnée d'une résine précurseur de matrice, comprenant : un métier à tisser, une enceinte dans laquelle sont stockés des fils ou torons imprégnés de résine, l'enceinte étant configurée pour alimenter le métier à tisser en fils ou torons. Conformément à l'invention, la température à l'intérieur de l'enceinte est comprise entre la température de transition vitreuse Tg⁰ de la résine à l'état cru et Tg⁰+10°C.

Dans un exemple de réalisation, le métier à tisser peut être dans l'enceinte.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue très schématique d'un exemple d'installation pour la mise en œuvre d'un procédé de fabrication d'une préforme fibreuse tissée imprégnée de résine selon l'invention,
- les figures 2A à 2D illustrent différentes étapes d'un exemple de procédé de fabrication d'une pièce en matériau composite selon l'invention, et
- les figures 3A à 3C illustrent différentes étapes d'une variante de procédé de fabrication d'une pièce en matériau composite selon l'invention.

### Description détaillée de l'invention

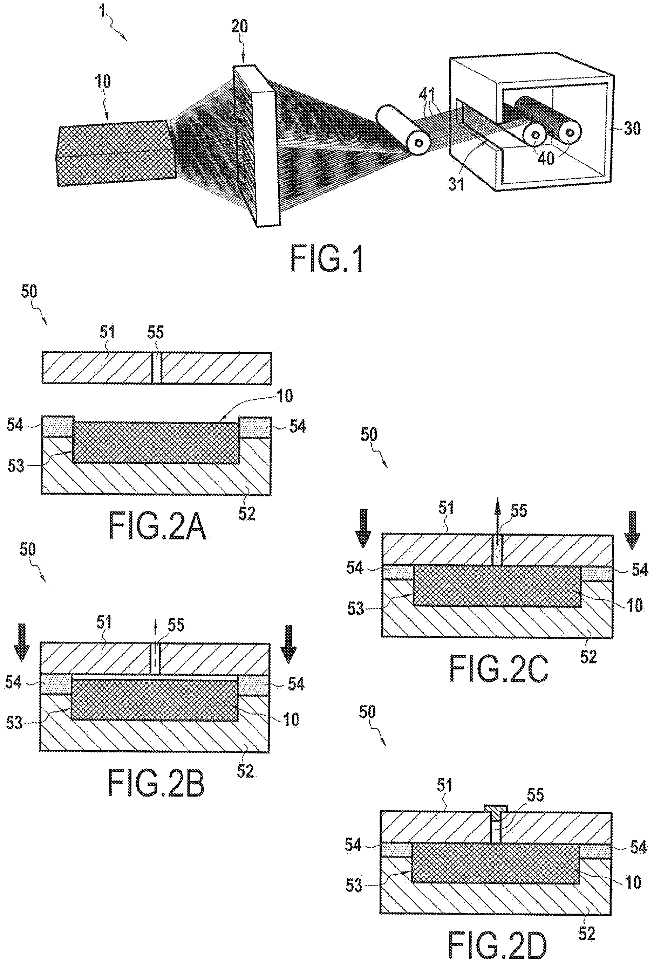

La figure 1 montre très schématiquement une installation 1 permettant de réaliser une préforme fibreuse 10 imprégnée de résine. L'installation 1 comprend un métier à tisser 20, par exemple du type jacquard, et une enceinte 30 située en amont du métier à tisser (dans le sens de convoyage des fils à tisser vers le métier à tisser). Des rouleaux 40 de fils ou torons 41 pré imprégnés de résine sont stockés à l'intérieur de l'enceinte 30. L'enceinte 30 comprend une ouverture 31 permettant aux fils ou torons des rouleaux 40 d'alimenter le métier à tisser 20. Conformément à l'invention, la température à l'intérieur de l'enceinte 30 est comprise entre la température de transition vitreuse Tg⁰ de la résine à l'état cru et Tg⁰+10°C de façon à ce que les fils ou torons 41 qui alimentent le métier à tisser 20 soient à la température de l'enceinte 30.

Dans une variante non illustrée, l'installation peut comprendre le métier à tisser 20, les rouleaux 40, et une enceinte refroidie à une température comprise entre Tg⁰ et Tg⁰+10°C dans laquelle sont présents le métier à tisser 20 et les rouleaux 40.

Toujours dans une variante non illustrée, les fils ou torons 41 peuvent être secs sur les rouleaux 40, et traverser un bain de résine lors de leur convoyage vers le métier à tisser de façon à les imprégner de résine avant leur tissage. Dans ce cas, on veillera à ce que les fils ou torons imprégnés soient à la bonne température avant d'être tissés.

Les fils ou torons 41 peuvent être en carbone, en céramique telle que du carbure de silicium SiC, en verre ou encore en aramide. La résine peut être choisie parmi les résines époxydes, et éventuellement comprendre des additifs permettant d'augmenter sa ténacité.

Pour obtenir une préforme fibreuse tissée imprégnée de résine, on réalise le tissage des fils ou torons pré imprégnés 41 provenant des rouleaux 40 stockés dans l'enceinte 30 à l'aide du métier à tisser 20. La température à laquelle sont maintenus lesdits fils ou torons 41 rend leur tissage possible sans encrassement du métier à tisser 20, puisque la résine n'est ni trop cassante, ni trop liquide ou collante. Comme indiqué précédemment, le tissage peut être un tissage tridimensionnel, mais également multicouche ou bidimensionnel. Le tissage tridimensionnel peut, dans l'exemple illustré, être un tissage à armure « interlock », connu en soit. D'autres types de tissage multicouches connus pourront être utilisés, comme notamment ceux décrits dans le document WO 2006/136755.

Un exemple de procédé de fabrication d'une pièce en matériau composite selon l'invention va maintenant être décrit en lien avec les figures 2A à 2D.

Après avoir obtenu une préforme fibreuse 10 tissée et imprégnée de résine comme décrit précédemment, la préforme 10 est détourée et les fils sortant des couches sont coupés, puis la préforme 10 est positionnée dans un moule 50. Le moule 50 illustré schématiquement sur les figures comprend une partie formant support 51 et un contre-moule 52, qui définissent entre eux une cavité creuse 43 dans laquelle la préforme 10 est placée. La cavité 53 présente une forme et des dimensions correspondant à la pièce à fabriquer. La partie formant support 51 comprend ici des joints 54 qui assurent l'étanchéité du moule 50 lorsque celui-ci est fermé. Dans l'exemple illustré, le moule 50 comprend également un évent 55.

Le moule 50 peut ensuite être progressivement fermé, comme illustré sur la figure 2B. Avant, après ou pendant la fermeture du moule 50, la préforme 10 est chauffée à une température de ramollissement de la résine. Lorsque le moule 50 est fermé de façon étanche et que la résine présente dans la préforme 10 est ramollie ou liquéfiée, on peut ensuite éliminer l'air présent dans la cavité 53 en faisant le vide. L'air est ici évacué de la cavité 53 par l'évent 55. On obtient ainsi après ces étapes une préforme 10 imprégnée de résine dans toute sa porosité interne et exempte de bulles d'air.

Puis, une pression de compaction peut être appliquée sur le moule 50 afin de mettre en forme la préforme et faire dégorger le surplus de résine présent dans la préforme, comme illustré sur la figure 2C. Ce surplus peut être évacué au travers de l'évent 55 par des moyens non illustrés. En outre, il est possible de maintenir une pression homogène à l'intérieur de la cavité 53 en réinjectant une partie de la résine qui a été évacuée lors de la compaction.

Enfin, le moule 50 est chauffé, de préférence de façon uniforme, afin d'amorcer la polymérisation (cuisson) de la résine présente dans la préforme 10 et de densifier la préforme 10 (figure 2D). On obtient ainsi après cuisson, la pièce en matériau composite qui pourra ensuite être démoulée et sur laquelle on pourra réaliser des finitions.

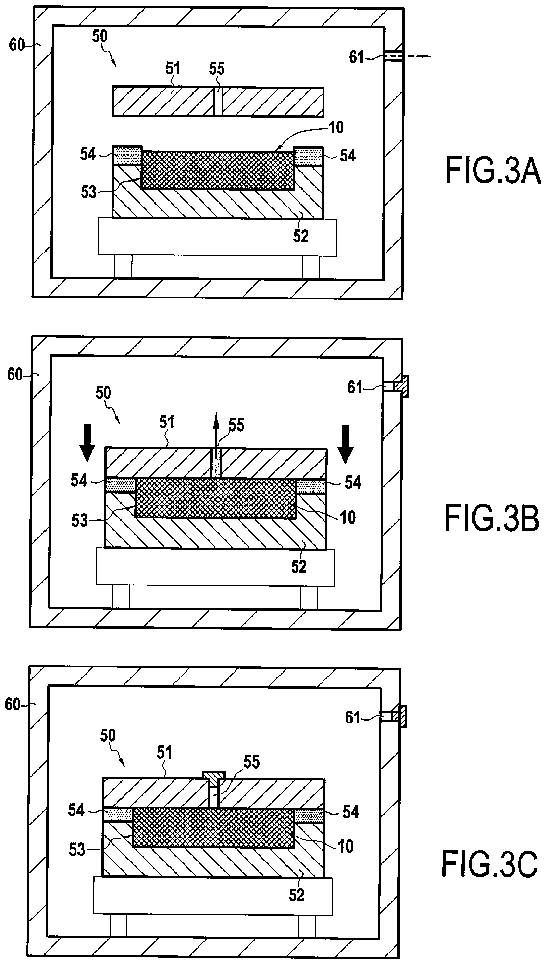

Un autre exemple de mise en œuvre d'un procédé selon l'invention est illustré sur les figures 3A à 3C.

Dans cet exemple, le moule 50 est placé dans une enceinte 60 hermétique et munie d'un évent 61. A la différence de l'exemple illustré sur les figures 2A à 2D, l'élimination de l'air présent dans la préforme 10 imprégnée est réalisé en faisant le vide dans l'enceinte 60 (figure 3A), et non plus directement à l'intérieur du moule 50 fermé. De la sorte, le moule 50 peut être fermé après l'étape d'élimination de l'air présent dans la préforme 10. Comme précédemment, le moule est ensuite fermé et une pression de compaction est appliquée sur le moule 50 (figure 3B) pour mettre en forme la préforme et faire dégorger le surplus de résine. Enfin, le moule 50 est chauffé afin de polymériser la résine, densifier la préforme 10 et obtenir la pièce finale (figure 3C). La pièce peut ensuite être démoulée.

Le procédé de fabrication d'une pièce en matériau composite selon l'invention a été illustré en utilisant un moule comprenant une partie formant support et un contre-moule. On notera qu'en variante on peut utiliser d'autres moyens connus pour réaliser la densification de la préforme, par exemple un montage avec bâche à vide disposé dans un autoclave.

Dans le présent exposé, l'expression « compris entre ... et ... » doit être entendue comme incluant les bornes.

### Exemple

On cherche à fabriquer une aube de soufflante de turbomachine aéronautique en matériau composite à matrice organique par un procédé selon l'invention. Les étapes suivantes sont réalisées successivement :
- on imprègne des torons de fibres de carbone avec une résine commercialisée sous la référence HexPly® 8552 de la société Hexcel, la température de transition vitreuse Tg⁰ de cette résine à l'état cru donnée par le fabriquant et obtenue par DSC est de l'ordre de -4°C (-3,95°C),
- on place les torons sous forme d'un rouleau dans une armoire réfrigérée à 0°C, l'armoire comprenant des ouvertures permettant d'alimenter un métier à tisser avec lesdits torons,
- on tisse les torons maintenus à 0°C dans le métier à tisser par tissage tridimensionnel afin d'obtenir une préforme fibreuse d'aube tissée imprégnée par la résine,
- on procède éventuellement à la découpe de la préforme tissée à l'aide de ciseaux,
- on dispose la préforme dans la cavité d'un moule ayant la forme de l'aube à fabriquer,
- on chauffe le moule à une température de 100°C afin de ramollir la résine,
- on ferme le moule et on fait le vide à l'intérieur de la cavité afin d'évacuer l'air présent dans la préforme,
- on applique une pression de compaction sur le moule pour mettre en forme la préforme et assurer une pression homogène dans la cavité du moule, au besoin on réinjecte de la résine qui aurait dégorgé de la préforme durant cette étape,
- on chauffe le moule jusqu'à 110°C pendant 150 minutes après une rampe de montée progressive en température afin de polymériser la résine,
- on démoule l'aube ainsi obtenue, et
- on réalise éventuellement des opérations de finition.

## Revendications

1. Procédé de fabrication d'une préforme fibreuse (10) tissée imprégnée d'une résine précurseur de matrice, ladite résine présentant à l'état cru une température de transition vitreuse Tg⁰, le procédé comprenant :
- l'imprégnation de fils ou torons (41) avec la résine,
- l'alimentation d'un métier à tisser (20) avec les fils ou torons imprégnés maintenus à une température comprise entre Tg⁰ et Tg⁰+10°C, et
- le tissage des fils ou torons dans le métier à tisser afin d'obtenir la préforme fibreuse tissée imprégnée de résine.

2. Procédé selon la revendication 1, dans lequel les fils ou torons (41) sont en carbone ou en carbure de silicium.

3. Procédé selon l'une quelconque des revendications 1 et 2, dans lequel la résine est une résine thermodurcissable époxyde.

4. Procédé selon l'une quelconque des revendications 1 à 3, dans lequel les fils ou torons (41) imprégnés de résine sont présents dans une enceinte réfrigérée (30) alimentant le métier à tisser (20) en fils ou torons imprégnés de résine.

5. Procédé selon l'une quelconque des revendications 1 à 4, dans lequel le tissage des fils ou torons est un tissage tridimensionnel.

6. Procédé de fabrication d'une pièce en matériau composite comprenant un renfort fibreux densifié par une matrice, le procédé comprenant les étapes suivantes :
- fabrication d'une préforme fibreuse (10) tissée imprégnée d'une résine précurseur de matrice par un procédé selon l'une quelconque des revendications 1 à 5,
- placement de la préforme fibreuse dans une cavité (54) d'un moule (50) ayant la forme de la pièce à fabriquer,
- chauffage de la préforme fibreuse à une température de ramollissement de la résine de façon à liquéfier la résine,
- élimination de l'air présent dans la préforme fibreuse,
- compactage de la préforme fibreuse dans le moule,
- traitement thermique de polymérisation de la résine présente dans la porosité de la préforme fibreuse de façon à obtenir la pièce en matériau composite, et
- démoulage de la pièce en matériau composite.

7. Procédé selon la revendication 6, dans lequel la pièce fabriquée est une aube de soufflante ou un carter de soufflante de turbomachine aéronautique.

8. Procédé selon l'une quelconque des revendications 6 et 7, dans lequel l'étape de compactage de la préforme fibreuse dans le moule comprend la réinjection dans le moule d'un surplus de résine ayant dégorgé de la préforme de façon à maintenir une pression uniforme à l'intérieur de la cavité du moule.

9. Installation (1) pour la fabrication d'une préforme fibreuse (10) tissée imprégnée d'une résine précurseur de matrice, comprenant : un métier à tisser (20), une enceinte (30) dans laquelle sont stockés des fils ou torons (41) imprégnés de résine, l'enceinte étant configurée pour alimenter le métier à tisser en fils ou torons, **caractérisée en ce que** la température à l'intérieur de l'enceinte est comprise entre la température de transition vitreuse Tg⁰ de la résine à l'état cru et Tg⁰+10°C.

10. Installation selon la revendication 9, dans laquelle le métier à tisser (20) est dans l'enceinte (30).

## Patentansprüche

1. Verfahren zur Herstellung eines gewebten Faservorformlings (10), der mit einem Matrixvorläuferharz imprägniert ist, wobei das Harz im Rohzustand eine Glasübergangstemperatur Tg⁰ aufweist, wobei das Verfahren umfasst:
- das Imprägnieren von Fäden oder Strängen (41) mit dem Harz,
- das Zuführen der imprägnierten Fäden oder Stränge, die auf einer Temperatur im Bereich zwischen Tg⁰ und Tg⁰+10 °C gehalten, zu einer Webmaschine (20), und
- das Weben der Fäden oder Stränge in der Webmaschine, um den mit Harz imprägnierten gewebten Faservorformling zu erhalten.

2. Verfahren nach Anspruch 1, bei dem die Fäden oder Stränge (41) aus Kohlenstoff oder aus Siliziumkarbid bestehen.

3. Verfahren nach einem der Ansprüche 1 und 2, bei dem das Harz ein duroplastisches Epoxidharz ist.

4. Verfahren nach einem der Ansprüche 1 bis 3, bei dem die mit Harz imprägnierten Fäden oder Stränge (41), in einem Kühlgehäuse (30) vorhanden sind, das die Webmaschine (20) mit mit Harz imprägnierten Fäden oder Strängen versorgt.

5. Verfahren nach einem der Ansprüche 1 bis 4, bei dem das Weben der Fäden oder Stränge ein dreidimensionales Weben ist.

6. Verfahren zur Herstellung eines Teils aus Verbundwerkstoff mit einer durch eine Matrix verdichteten Faserverstärkung, wobei das Verfahren die folgenden Schritte umfasst:
- Herstellen eines gewebten Faservorformlings (10), der mit einem Matrixvorläuferharz imprägniert ist, durch ein Verfahren nach einem der Ansprüche 1 bis 5,
- Platzieren des Faservorformlings in einem Hohlraum (54) einer Form (50), welcher die Form des herzustellenden Teils aufweist,
- Erhitzen des Faservorformlings auf eine Temperatur zum Erweichen des Harzes, um das Harz zu verflüssigen,
- Entfernen der in dem Faservorformling vorhandenen Luft,
- Verdichten des Faservorformlings in der Form,
- Wärmebehandlung zum Polymerisieren des in der Porosität des Faservorformlings vorhandenen Harzes, um das Teil aus Verbundwerkstoff zu erhalten, und
- Ausformen des Verbundwerkstoffteils.

7. Verfahren nach Anspruch 6, bei dem das hergestellte Teil eine Gebläseschaufel oder ein Gebläsegehäuse einer Luftfahrtturbomaschine ist.

8. Verfahren nach einem der Ansprüche 6 und 7, bei dem der Schritt des Verdichtens des Faservorformlings in der Form das erneute Einspritzen eines Harzüberschusses, der aus dem Vorformling geflossen ist, in die Form umfasst, um innerhalb des Hohlraums der Form einen gleichmäßigen Druck aufrechtzuerhalten.

9. Anlage (1) zur Herstellung eines gewebten Faservorformlings (10), der mit einem Matrixvorläuferharz imprägniert ist, umfassend: eine Webmaschine (20), ein Gehäuse (30), in dem mit Harz imprägnierte Fäden oder Stränge (41) gelagert sind, wobei das Gehäuse dazu ausgelegt ist, die Webmaschine mit Fäden oder Strängen zu versorgen, **dadurch gekennzeichnet, dass** die Temperatur innerhalb des Gehäuses zwischen der Glasübergangstemperatur Tg⁰ des Harzes im Rohzustand und Tg⁰+10 °C liegt.

10. Anlage nach Anspruch 9, bei der sich die Webmaschine (20) in dem Gehäuse (30) befindet.

## Claims

1. A method of fabricating a woven fiber preform (10) that is impregnated with a matrix-precursor resin, said resin, in the raw state, presenting a glass transition temperature Tg⁰, the method comprising:
- impregnating yarns or strands (41) with the resin;
- feeding a loom (20) with the impregnated yarns or strands maintained at a temperature in the range Tg⁰ to Tg⁰+10°C; and
- weaving the yarns or strands in the loom in order to obtain the resin-impregnated woven fiber preform.

2. A method according to claim 1, wherein the yarns or strands (41) are made of carbon or of silicon carbide.

3. A method according to claim 1 or claim 2, wherein the resin is a thermosetting epoxy resin.

4. A method according to any one of claims 1 to 3, wherein the resin-impregnated yarns or strands (41) are present in a refrigerated enclosure (30) feeding the loom (20) with resin-impregnated yarns or strands.

5. A method according to any one of claims 1 to 4, wherein the yarns or strands are woven by three-dimensional weaving.

6. A method of fabricating a composite material part comprising fiber reinforcement densified by a matrix, the method comprising the following steps:
- fabricating a woven fiber preform (10) that is impregnated with a matrix-precursor resin by means of a method according to any one of claims 1 to 5;
- placing the fiber preform in a cavity (54) of a mold (50) having the shape of the part that is to be fabricated;
- heating the fiber preform to a softening temperature of the resin in order to liquefy the resin;
- eliminating the air present in the fiber preform;
- compacting the fiber preform in the mold;
- subjecting the resin present in the pores of the fiber preform to polymerization heat treatment so as to obtain a composite material part; and
- unmolding the composite material part.

7. A method according to claim 6, wherein the fabricated part is a fan blade or a fan casing for an aviation turbine engine.

8. A method according to claim 6 or claim 7, wherein the step of compacting the fiber preform in the mold includes taking surplus resin that has been discharged from the preform and reinjecting it into the mold so as to maintain a uniform pressure inside the mold cavity.

9. An installation (1) for fabricating a woven fiber preform (10) that is impregnated with a matrix-precursor resin, the installation comprising: a loom (20), an enclosure (30) storing resin-impregnated yarns or strands (41), the enclosure being configured to feed the loom with yarns or strands, and the installation being **characterized in that** the temperature inside the enclosure lies in the range from the glass transition temperature Tg⁰ of the resin in the raw state to Tg⁰+10°C.

10. An installation according to claim 9, wherein the loom (20) is in the enclosure (30).
